# EUROPÄISCHE PATENTSCHRIFT

(11) **EP 0 963 562 B1**
(45) Veröffentlichungstag und Bekanntmachung des Hinweises auf die Patenterteilung: **14.08.2002**
(21) Anmeldenummer: 98909290.3
(22) Anmeldetag: 28.01.1998
(51) Int. Cl.: G01S 13/62

(54) **VERFAHREN ZUR BESTIMMUNG EINER BEWEGUNGSRICHTUNG**
METHOD FOR DETERMINING THE DIRECTION OF A MOVEMENT
PROCEDE POUR DETERMINER UN SENS DE DEPLACEMENT

(30) Priorität: 28.02.1997 DE 19708242
(43) Veröffentlichungstag der Anmeldung: 15.12.1999
(73) Patentinhaber: SIEMENS AKTIENGESELLSCHAFT, 80333 München (DE)
(72) Erfinder: SCHUBERT, Richard, D-10961 Berlin (DE)
(86) Internationale Anmeldenummer: DE9800247
(87) Internationale Veröffentlichungsnummer: WO9838527

(56) Entgegenhaltungen:
- US-A- 3 760 400
- US-A- 3 796 989
- US-A- 3 878 526
- US-A- 3 893 114
- US-A- 4 961 039
- HEIDE ET AL.: "A High Performance Multisensor System for Precise Vehicle Ground Speed Measurement " MICROWAVE JOURNAL, Juli 1996, Seiten 22-34, XP000679074 in der Anmeldung erwähnt

## Beschreibung

Die vorliegende Erfindung betrifft ein Verfahren zur Bestimmung der Orientierung einer Bewegungsrichtung eines beweglichen Objektes relativ zu ortsfest angeordneten Objekten.

Zur präzisen und berührungslosen Ermittlung der Geschwindigkeit von Fahrzeugen werden unter anderem Mikrowellen-Dopplersensoren eingesetzt, wie z. B. in dem Übersichtsartikel von P. Heide, R. Schubert, V. Mágori, R. Schwarte, "A High Performance Multisensor System for Precise Vehicle Ground Speed Measurement", Microwave Journal, 7, 1996, p. 22 - 34 beschrieben ist. Bei einfachen Realisierungen wird nur der Betrag der Geschwindigkeit, nicht aber die Orientierung der Bewegungsrichtung, d. h. die Bewegung vorwärts oder rückwärts, ermittelt. In bekannten Meßsystemen wird zur Ermittlung der Orientierung der Bewegung ein komplexwertiges Dopplersignal herangezogen. Die Bereitstellung von zwei unabhängigen Komponenten (Realteil und Imaginärteil) des Signales ist aber mit einem nicht unerheblichen schaltungstechnischen Aufwand verbunden. Hierfür ist eine zweite Empfangsdiode, ein heterodyner Aufbau oder eine Schaltung mit Phasenumtastung notwendig. Die Bewegungsrichtung kann aus dem Drehsinn des in der Zahlenebene umlaufenden, den komplexen Wert angebenden Vektors des ermittelten Signales abgeleitet werden. Wie das grundsätzlich geschieht, ist in dem angegebenen Artikel beschrieben.

Beispielsweise aus US A 3 893 114 ist eine Methode zur Kollisionswarnung beschrieben, bei der mittels zweier Antennen an einem Fahrzeug ein relativ zur Bewegungsrichtung des bewegten Fahrzeugs bestimmter Kollisionswinkel mit Hilfe von zwei unabhängigen Komponenten des Signales bestimmt wird.

Aufgabe der vorliegenden Erfindung ist es, ein Verfahren zur Bestimmung der Orientierung einer Bewegungsrichtung anzugeben, das mit vergleichsweise geringem Aufwand realisierbar ist.

Diese Aufgabe wird mit dem Verfahren mit den Merkmalen des Anspruches 1 gelöst. Weitere Ausgestaltungen ergeben sich aus den abhängigen Ansprüchen.

Bei dem erfindungsgemaßen Verfahren wird die Tatsache ausgenutzt, daß sich bei einem schräg bezüglich der Fahrtrichtung abstrahlenden Dopplersensor infolge des sich während der Bewegung laufend ändernden Abstrahlungs- und Reflexionswinkels die ermittelte Dopplerfrequenz erniedrigt oder erhöht, je nachdem, ob der Sensor sich auf die reflektierenden Objekte zubewegt oder sich von diesen Objekten entfernt.

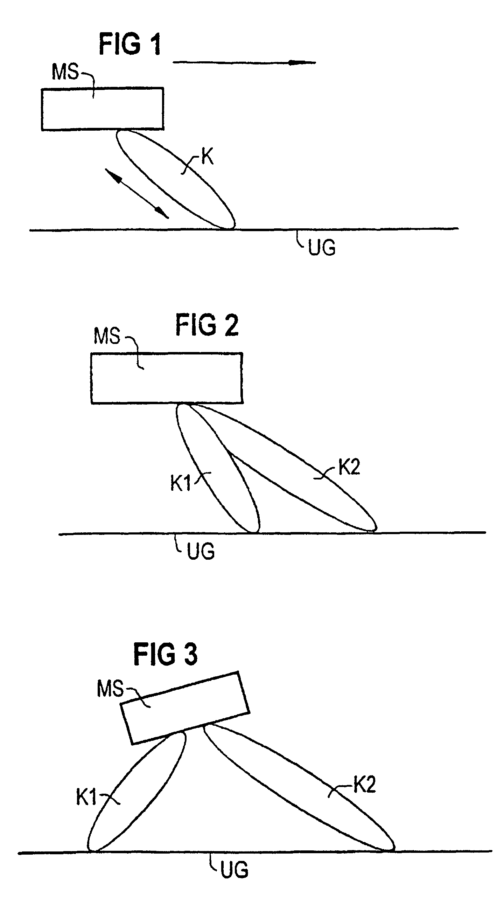

Es folgt eine Beschreibung des erfindungsgemäßen Verfahrens anhand der Figuren 1 bis 3, die im Schema die Verwendung eines Dopplersensors zum Ausführen des Verfahrens zeigen.

In Figur 1 ist schematisch eine Anordnung zum Ausführen des erfindungsgemäßen Verfahrens dargestellt. Es ist ein Mikrowellensensor MS dargestellt, der als Dopplersensor betrieben wird. Dieser Mikrowellensensor verfügt über eine Sende- und Empfangseinrichtung, die mittels einer geeigneten Antenne gebündelt Mikrowellen auf den Untergrund UG, über den sich ein Fahrzeug bewegt, abstrahlt. Der Mikrowellensensor ist so an dem Fahrzeug befestigt, daß die Abstrahlrichtung der Mikrowellen schräg zur Ebene des Untergrundes erfolgt. Die abgestrahlten Mikrowellen sind nach Möglichkeit weitgehend keulenförmig gebündelt. Die abgestrahlte Keule K, die schräg auf den Untergrund UG auftrifft und von dort reflektiert wird, ist in Figur 1 im Schema eingezeichnet. Alternativ kann der Sensor z. B. als Kontrollsensor für die Annäherung oder Entfernung des Fahrzeuges fest am Untergrund angebracht sein. Das Verfahren kann also auch zur Feststellung der Annäherung eines Objektes verwendet werden. In Figur 1 ist die Bewegungsrichtung des Fahrzeuges und des daran angebrachten Dopplersensors mit dem Pfeil angedeutet.

Die von dem Mikrowellensensor schräg nach unten abgestrahlte Keule K von Mikrowellen wird von den Unebenheiten des Untergrundes UG diffus reflektiert. Diejenigen Anteile des ausgesendeten Signales, die in die Sendeantenne oder eine dafür vorgesehene Empfangsantenne zurückreflektiert werden, sind aufgrund des Dopplereffektes frequenzverschoben und erlauben so eine Bestimmung der Fahrzeuggeschwindigkeit. Da diese Dopplerfrequenz proportional zum Cosinus des Winkels zwischen der momentanen Bewegungsrichtung und der Verbindungsgeraden zwischen dem Mikrowellensensor und dem reflektierenden Objekt ist, ergibt sich für die Reflexion an weiter vom Sensor entfernten Objekten eine höhere Frequenz als für solche reflektierende Objekte, die näher am Sensor sind. Je nachdem, ob sich das Fahrzeug den reflektierenden Objekten nähert oder sich davon entfernt, erhält man eine sich stets erniedrigende oder erhöhende Dopplerfrequenz. Das setzt allerdings voraus, daß dieselben Objekte während eines bestimmten Zeitintervalles als reflektierende Objekte für die Mikrowellen fungieren. Die Keule K darf daher keinen zu geringen Öffnungswinkel aufweisen, sondern die Mikrowellen dürfen nur so stark gebündelt werden, daß während der Fahrt ein reflektierendes Objekt jeweils eine kurze Zeit von dem gebündelten Mikrowellenstrahl überstrichen wird. Die Reflexion des Mikrowellenstrahles von diesem Objekt zurück in den Sensor erfolgt daher über dieses kurze Zeitintervall hinweg mit einem stets zunehmenden oder stets abnehmenden Winkel zur Fahrtrichtung. Die von diesem Objekt reflektierten Mikrowellen liefern daher eine sich erniedrigende oder erhöhende Dopplerfrequenz, je nachdem, ob sich das Fahrzeug den Objekten nähert oder nicht. Die grundlegende Idee des erfindungsgemäßen Verfahrens besteht darin, die Orientierung der Bewegungsrichtung des Fahrzeuges daraus abzuleiten, ob sich das empfangene Dopplersignal im wesentlichen aus der Überlagerung von monoton fallenden oder von monoton steigenden Komponenten dieses Signales zusammensetzt.

Bei einer einfachen Realisierung des Verfahrens werden Änderungen in der zeitlichen Abfolge von Nulldurchgängen des empfangenen Signales festgestellt. Da das Empfangssignal eine Überlagerung periodischer, wellenförmiger Funktionen bildet, treten in dem Signalverlauf in kurzen Abständen Nulldurchgänge auf. Aus der zeitlichen Abfolge dieser Nulldurchgänge kann die Frequenz des hauptsächlichen Anteiles der überlagerten Wellenfunktionen bestimmt werden. In den Fällen, in denen dieser hauptsächliche Anteil der Überlagerung die dopplerverschobene Signalwelle ist, kann daher aus der Frequenz der Nulldurchgänge auf die Dopplerfrequenz rückgeschlossen werden. Wenn die Nulldurchgänge zunehmend in kürzeren Abständen zueinander erfolgen, erhöht sich die Dopplerfrequenz, im anderen Fall erniedrigt sich die Dopplerfrequenz. Diese Ausführungsform des Verfahrens läßt sich nur dann realisieren, wenn z. B. nur wenige reflektierende Objekte vorhanden sind oder wenn ein Teil der reflektierenden Objekte die Reflexionen des Mikrowellensignales dominieren. Ist das Fahrzeug z. B. eine Lokomotive, an der ein Dopplersensor montiert ist, erfolgt eine Reflexion von Mikrowellen, die von diesem Sensor auf den Untergrund abgestrahlt werden, besonders stark von Gleisschwellen, Köpfen von Metallschrauben, mit denen die Gleise auf den Schwellen befestigt sind, Weichen oder dgl. herausragenden Objekten, die nur in gewissen Abständen angeordnet sind. Bei einem Straßenfahrzeug kann die Reflexion z. B. von eigens aufgebrachten Markierungen erfolgen. Die Amplitude des von diesen Objekten reflektierten Signales ist dann ausreichend groß, um eine klare Zuordnung der aus den Nulldurchgängen ermittelten Frequenz zu der durch die Reflexion hervorgerufenen Dopplerfrequenz zuzulassen. Weist daher das empfangene Signal eine Amplitude mit einem Betrag mindestens eines vorgegebenen Wertes auf, kann eine Erhöhung oder Erniedrigung der relevanten Dopplerfrequenzen aus der Änderung der zeitlichen Abstände der Nulldurchgänge des Empfangssignales ermittelt werden.

Gibt es keine dominierenden einzelnen reflektierenden Objekte, so sind im Dopplersignal keine Anteile mit markant erhöhter Amplitude vorhanden. Das auszuwertende Dopplersignal ergibt sich zu jedem Zeitpunkt als Überlagerung der Reflexionssignale von reflektierenden Objekten, die sich an unterschiedlichen Stellen des Untergrundes im Bereich befinden, der von der Keule des Mikrowellenbündels überstrichen wird. Aufgrund des unterschiedlichen Winkels des von diesen Objekten reflektierten Mikrowellenstrahles zur Fahrtrichtung tragen diese verschiedenen Komponenten unterschiedliche Frequenzanteile zu dem Überlagerungssignal bei. Die Orientierung der Bewegungsrichtung kann dann nicht mehr durch einfache Auswertung der Nulldurchgänge gewonnen werden. Aber auch in diesem Fall ist die Information über die Orientierung der Fahrtrichtung noch in dem Dopplersignal enthalten. Sie kann mit Hilfe geeigneter Algorithmen aus dem Signal extrahiert werden. Vorzugsweise verwendet man dafür ein als Bezugssignal fungierendes theoretisches Dopplersignal, das man z. B. aus einer Messung oder aus einer theoretischen Modellrechnung für den Fall einer bestimmten Fahrtgeschwindigkeit und Fahrtrichtung ermittelt. Dieses theoretische Dopplersignal wird verglichen mit dem tatsächlich auftretenden empfangenen Dopplersignal. Dieser Vergleich kann z. B. in einer Korrelation der beiden Signale miteinander bestehen. Je nach der Orientierung der Bewegungsrichtung ergibt sich eine bessere oder schlechtere Übereinstimmung des tatsächlichen Dopplersignales mit dem Bezugssignal.

Für die sichere Erkennung der Orientierung der Fahrtrichtung ist aufgrund der statistischen Natur des Dopplersignales je nach Art des vorhandenen Untergrundes die Auswertung über eine Mindestfahrstrecke notwendig. Das ist aber für die praktische Realisierung des erfindungsgemäßen Verfahrens zur Bestimmung der Orientierung einer Fahrrichtung unerheblich, da sich die Orientierung der Fahrtrichtung bei Fahrzeugen nicht allzu plötzlich ändert. Eine weitere Verbesserung des Verfahrens ergibt sich durch Verwendung einer Antenne mit spezieller Abstrahlcharakteristik. Es kann z. B. eine Antenne mit zwei Keulen K1, K2 entsprechend Figur 2 eingesetzt werden. Die beiden Keulen der gebündelten Mikrowellen weisen verschiedene mittlere Winkel zum Untergrund auf. Es ist auch möglich, entsprechend dem Schema von Figur 3 eine Antenne zu verwenden, bei der eine Keule K1 der gebündelten Mikrowellenstrahlung rückwärts, d. h. entgegen der Fahrtrichtung, ausgerichtet wird und eine zweite Keule K2 der gebündelten Mikrowellenstrahlung entsprechend Figur 1 vorwärts, d. h. in Richtung der Bewegung abgestrahlt wird. Das erfindungsgemäße Verfahren läßt sich statt mit einem Mikrowellen-Sender unter Verwendung anderer Signalmedien, die sich wellenförmig ausbreiten, z. B. mit Ultraschall oder mit elektromagnetischen Wellen anderer Wellenlänge durchführen.

## Patentansprüche

1. Verfahren zur Bestimmung der Orientierung einer Bewegungsrichtung eines beweglichen Objektes relativ zu ortsfest angeordneten Objekten,
- bei dem ein Dopplersensor mit mindestens einer Sende- und Empfangseinrichtung, die für weitgehend gebündelte Abstrahlung und Empfang eines sich in Wellenform ausbreitenden Signals vorgesehen ist, verwendet wird,
- bei dem dieser Dopplersensor derart angeordnet ist, dass bei einer Bewegung des beweglichen Objekts ein bestimmtes ortsfest angeordnetes Objekt von zumindest einem Teil des vom Dopplersensor gebündelt abgestrahlten Signals überstrichen wird, so dass das Signal vom bestimmten ortsfesten Objekt während eines Zeitintervalls unter sich veränderndem Winkel reflektiert wird, und
- bei dem aus einer Erhöhung oder Erniedrigung einer erfaßten Dopplerfrequenz die Orientierung der Bewegungsrichtung abgeleitet wird.

2. Verfahren nach Anspruch 1,
bei dem als Signalmedium Mikrowellen verwendet werden.

3. Verfahren nach Anspruch 1 oder 2,
bei dem Dopplerfrequenzen erfaßt werden, die sich aus einem Anteil des empfangenen Signals ableiten lassen, der mindestens eine vorgegebene Amplitude aufweist, und
bei dem eine Erhöhung oder Erniedrigung der Dopplerfrequenzen aus der Änderung der zeitlichen Abstände der Nulldurchgänge des empfangenen Signals ermittelt wird.

4. Verfahren nach Anspruch 1 oder 2,
bei dem eine Erhöhung oder Erniedrigung erfaßter Dopplerfrequenzen dadurch ermittelt wird, daß die zeitliche Änderung des empfangenen Signals mit einer vorgegebenen zeitlichen Änderung des empfangenen Signals, die einer bestimmten Orientierung der Bewegungsrichtung entspricht, verglichen wird.

5. Verfahren nach Anspruch 4,
bei dem der Vergleich der zeitlichen Änderung des empfangenen Signals mit der vorgegebenen zeitlichen Änderung des empfangenen Signals durch Korrelation erfolgt.

6. Verfahren nach Anspruch 4 oder 5,
bei dem die vorgegebene zeitliche Änderung des empfangenen Signals so gewählt wird, daß sie einer Reflexion des von der verwendeten Sende- und Empfangseinrichtung abgestrahlten Signals an einem bestimmten Objekt bei einer vorgegebenen relativen Bewegung zwischen diesem Objekt und dem Dopplersensor entspricht.

7. Verfahren nach Anspruch 6,
bei dem die vorgegebene zeitliche Änderung des empfangenen Signals durch eine Messung unter festgelegten Bedingungen festgestellt wird.

## Claims

1. Method for determining the orientation of a movement direction of a moving object relative to objects arranged at fixed positions,
- in which a Doppler sensor is used having at least one transmitting and receiving device, which is intended for largely focussed transmission and reception of a signal which propagates in the form of waves,
- in which this Doppler sensor is arranged such that, when the moving object moves, a specific object arranged at a fixed position is swept by at least a portion of the signal transmitted in a focussed manner by the Doppler sensor, so that the signal is reflected at a changing angle from the specific object in a fixed position during a time interval, and
- in which the orientation of the movement direction is derived from any increase or decrease in the detected Doppler frequency.

2. Method according to Claim 1,
in which microwaves are used as the signal medium.

3. Method according to Claim 1 or 2,
in which Doppler frequencies are detected which can be derived from a component of the received signal which is at at least a predetermined amplitude, and
in which any increase or decrease in the Doppler frequencies is determined from the change in the time intervals between the zero crossings of the received signal.

4. Method according to Claim 1 or 2,
in which any increase or decrease in the detected Doppler frequencies is determined by comparing the rate of change of the received signal with a predetermined rate of change of the received signal which corresponds to a specific orientation of the movement direction.

5. Method according to Claim 4,
in which the comparison of the rate of change of the received signal with the predetermined rate of change of the received signal is carried out by correlation.

6. Method according to Claim 4 or 5,
in which the predetermined rate of change of the received signal is chosen such that it corresponds to a reflection of the signal, which is transmitted by the transmitting and receiving device that is used, on a specific object for a predetermined relative movement between this object and the Doppler sensor.

7. Method according to Claim 6,
in which the predetermined rate of change of the received signal is determined by a measurement in defined conditions.

## Revendications

1. Procédé destiné à déterminer l'orientation d'un sens de déplacement d'un objet mobile par rapport à des objets fixes
- dans lequel on utilise un capteur de Doppler ayant au moins un dispositif émetteur et récepteur, prévu pour l'émission essentiellement focalisé et la réception d'un signal qui se propage sous la forme d'onde,
- dans lequel ce capteur de Doppler est disposé de telle sorte que, lors d'un déplacement de l'objet mobile, un objet déterminé, dont la position est fixe, est balayé par au moins une partie du signal émis en faisceau par le capteur de Doppler, si bien que le signal est réfléchi, sous un angle variable et pendant un laps de temps, par l'objet déterminé, dont la position est fixe, et
- dans lequel, à partir d'une augmentation ou d'une diminution d'une fréquence Doppler détectée, on déduit l'orientation du sens de déplacement.

2. Procédé selon la revendication 1
dans lequel on utilise des micro-ondes en tant que support pour le signal.

3. Procédé selon la revendication 1 ou 2
dans lequel sont détectées des fréquences Doppler qui peuvent être déduites d'une partie du signal reçu qui présente au moins une amplitude prédéterminée et
dans lequel une augmentation ou une diminution des fréquences Doppler sont déterminées à partir de la variation des écarts de temps entre les passages à zéro du signal reçu.

4. Procédé selon la revendication 1 ou 2
dans lequel une augmentation ou une diminution de fréquences Doppler détectées est déterminée par le fait que la variation dans le temps du signal reçu est comparée à une variation dans le temps prédéterminée du signal reçu laquelle correspond à une orientation déterminée du sens de déplacement.

5. Procédé selon la revendication 4
dans lequel la comparaison de la variation dans le temps du signal reçu avec la variation dans le temps prédéterminée du signal reçu est effectuée par corrélation.

6. Procédé selon la revendication 4 ou 5
dans lequel la variation dans le temps prédéterminée du signal reçu est choisie de telle sorte qu'elle corresponde à une réflexion du signal, émis par le dispositif émetteur et récepteur utilisé, sur un objet déterminé lors d'un déplacement relatif prédéterminé entre cet objet et le capteur de Doppler.

7. Procédé selon la revendication 6
dans lequel la variation dans le temps prédéterminée du signal reçu est constatée par une mesure sous des conditions déterminées.
